Europäisches Patentamt

European Patent Office

Office européen des brevets

(11) Numéro de publication: **0 409 669 A1**

## (12) DEMANDE DE BREVET EUROPEEN

(21) Numéro de dépôt: **90401180.6**

(22) Date de dépôt: **30.04.90**

(51) Int. Cl.⁵: **B60P 1/46**

Le titre de l'invention a été modifié (Directives relatives à l'examen pratiqué à l'OEB, A-III, 7.3)

(30) Priorité: **02.05.89 FR 8905831**

(43) Date de publication de la demande:
**23.01.91 Bulletin 91/04**

(84) Etats contractants désignés:
**BE ES GB IT LU NL**

(71) Demandeur: **Bourgeois, Alain**
**Le Moulin Gros Bois, Dampierre sous Bouhy**
**F-58310 Saint Amand en Puisaye(FR)**

(72) Inventeur: **Bourgeois, Alain**
**Le Moulin Gros Bois, Dampierre sous Bouhy**
**F-58310 Saint Amand en Puisaye(FR)**

(74) Mandataire: **Bruder, Michel et al**
**Cabinet Michel Bruder Conseil en Brevets**
**10, rue de la Pépinière**
**F-75008 Paris(FR)**

(54) **Hayon élévateur à balancier guidé par des glissières.**

(57) L'invention concerne un dispositif de fermeture de la plate-forme d'un hayon élévateur, notamment du type à glissières, caractérisé en ce que les bras de manoeuvre (2) de la plate-forme (4), qui peuvent coulisser dans des rails prévus à cet effet dans le bâti (3) du hayon (1), supportent ladite plate-forme (4) par l'intermédiaire d'au moins deux bielles (5), symétriquement disposées, et articulées librement, de part et d'autre de la plate-forme (4), de telle manière qu'articulées librement sur lesdits bras de manoeuvre (2), lesdites bielles (5) procurent un mouvement de balancier à la plate-forme (4) relevée en position verticale, qui peut, de ce fait, être appliquée uniformément contre la carrosserie du véhicule équipé du hayon (1), en soumettant le joint, qui assure l'étanchéité entre la plate-forme (4) et la carrosserie, à une pression constante sur toute sa longueur.

Le dispositif de fermeture de la plate-forme d'un hayon élévateur selon l'invention est notamment destiné aux hayons à glissières qui équipent les véhicules pour handicapés moteurs, ou les véhicules utilitaires, servant par exemple à transporter des objets, tels que du linge ou des colis, dans des corbeilles munies de roulettes, et dont on veut que la plate-forme soit utilisée en tant que porte étanche sur la carrosserie.

_Fig. 1_

L'invention concerne un dispositif de fermeture de la plate-forme d'un hayon élévateur, notamment du type à glissières, dont la plate-forme est utilisée comme porte.

Dans un hayon à glissières, un dispositif à bras de manoeuvre mobiles, coulissant dans des rails, ou glissières, verticaux, prévus à cet effet, supporte, à sa partie basse, une plate-forme. Les rails forment un bâti, également appelé portique, qui est solidaire du véhicule sur lequel est installé le hayon. La plate-forme peut basculer autour d'un axe horizontal, de manière à passer d'une position ouverte horizontale, dans laquelle on peut monter ou descendre des charges y ayant été préalablement disposées, à une position verticale de fermeture, dans laquelle elle sert accessoirement de porte.

Ce dispositif possède l'inconvénient de ne pas procurer une fermeture parfaitement étanche entre la plate-forme du hayon et la carrosserie du véhicule qui en est équipé. En effet, le couple de la force appliquée sur la plate-forme, par rapport à son axe de rotation qui est solidaire des bras de manoeuvre, diminue régulièrement, du bas vers le haut de ladite plate-forme ; il en résulte un écrasement progressif du joint assurant l'étanchéité avec la carrosserie, celui-ci étant moins écrasé en haut qu'en bas.

L'invention vise à remédier à cet inconvénient en proposant un dispositif de fermeture de la plate-forme d'un hayon élévateur, notamment du type à glissières, caractérisé en ce que les bras de manoeuvre de la plate-forme, qui peuvent coulisser dans des rails prévus à cet effet dans le bâti du hayon, supportent ladite plate-forme par l'intermédiaire d'au moins deux bielles articulées librement, et préférentiellement disposées, par exemple de part et d'autre de la plate-forme, de telle manière qu'articulées librement sur lesdits bras de manoeuvre, lesdites bielles procurent un mouvement de balancier à la plate-forme relevée en position verticale, qui peut, de ce fait, être appliquée uniformément contre la carrosserie du véhicule équipé du hayon, en soumettant le joint, qui assure l'étanchéité entre la plate-forme et la carrosserie, à une pression constante sur toute sa longueur.

Conformément au dispositif suivant l'invention, les bielles procurent un mouvement de translation à la plate-forme par rapport au bâti, sans que celle-ci ait perdu ses possibilités de pivotement, qui s'effectue alors non plus autour d'un axe d'articulation situé sur le bâti, mais autour d'un axe approximativement horizontal passant par les points où sont fixées les bielles sur la plate-forme ; ce degré de liberté supplémentaire permet donc, de manière très simple, de remédier à l'inconvénient des dispositifs connus à ce jour.

La possibilité de translation de la plate-forme, parallèlement à elle-même, procuré par les bielles, permet d'adapter parfaitement la plate-forme sur la carrosserie du véhicule ; en effet, en position verticale, la trajectoire de la plate-forme peut être considérée comme pratiquement linéaire (il s'agit en fait d'un petit arc de cercle, dont le centre est situé sur l'axe d'articulation des bielles supportant la plate-forme, et dont le rayon est égal à la longueur des bielles). Le joint peut alors être régulièrement écrasé sur toute sa longueur, et si, malgré tout, cet écrasement demeure insuffisant, il suffit d'appuyer sur la plate-forme aux endroits où l'on désire le corriger ; celle-ci bascule alors légèrement du côté où s'effectue cet appui, et vient écraser le joint.

De manière inattendue, le dispositif de fermeture selon l'invention est particulièrement bien adapté dans les cas où la carrosserie sur laquelle vient s'appuyer la plate-forme servant de porte, après son relevage, ne possède pas un profil s'inscrivant parfaitement dans un plan ; selon l'invention, il est en effet aisé d'épouser de petites déformations de la carrosserie, sans perdre d'étanchéité au niveau du joint. De la même façon, il est possible d'incliner légèrement la plate-forme après son relevage complet, celle-ci se retrouvant alors dans une position sensiblement verticale, et non plus strictement verticale.

D'autres caractéristiques et avantages du dispositif de fermeture selon l'invention ressortiront mieux de la description qui va suivre d'un mode préféré et non limitatif de réalisation de ce dispositif, en référence au dessin annexé sur lequel:

- la figure 1 est une vue partielle en perspective et en élévation d'un hayon du type à glissières équipé du dispositif de fermeture selon l'invention,

- la figure 2 est une vue latérale en élévation d'une première variante de réalisation du dispositif selon l'invention, avec la plate-forme du hayon en position basse,

- la figure 3 est une vue latérale en élévation de la même variante de réalisation du dispositif selon l'invention, avec la plate-forme du hayon en position de relevage, juste avant que celle-ci ne vienne s'appliquer sur la carrosserie,

- la figure 4 est une vue latérale en élévation d'une autre variante de réalisation du dispositif selon l'invention, avec la plate-forme du hayon en position basse,

- la figure 5 est une vue latérale en élévation de la variante de réalisation précédente du dispositif selon l'invention, avec la plate-forme du hayon en position relevée.

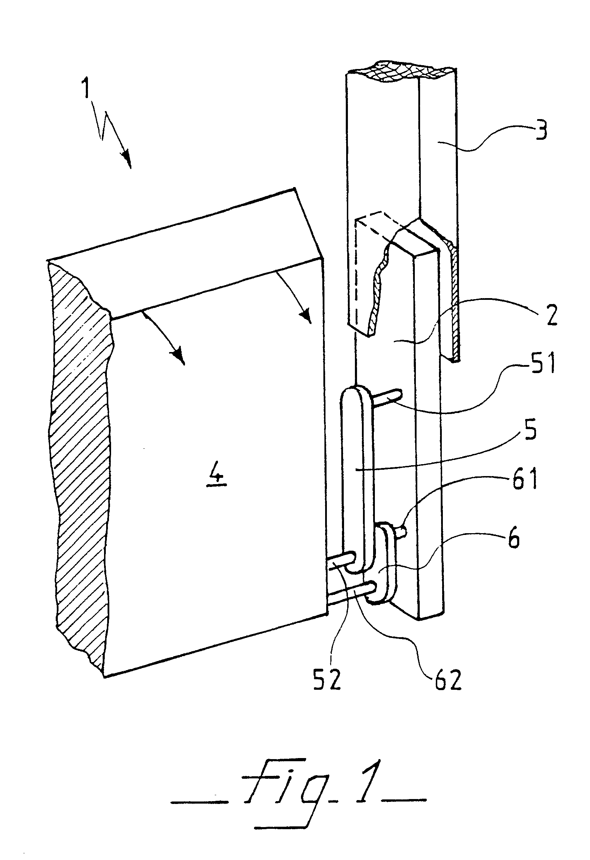

Conformément à la figure 1, un hayon élévateur 1 comprend des bras de manoeuvre 2 solidaires d'un bâti 3, et permettant de monter et descendre une plate-forme 4. Par exemple, le dispositif procurant ce mouvement peut être un système à glissières, non représenté sur les figures, et connu en soi.

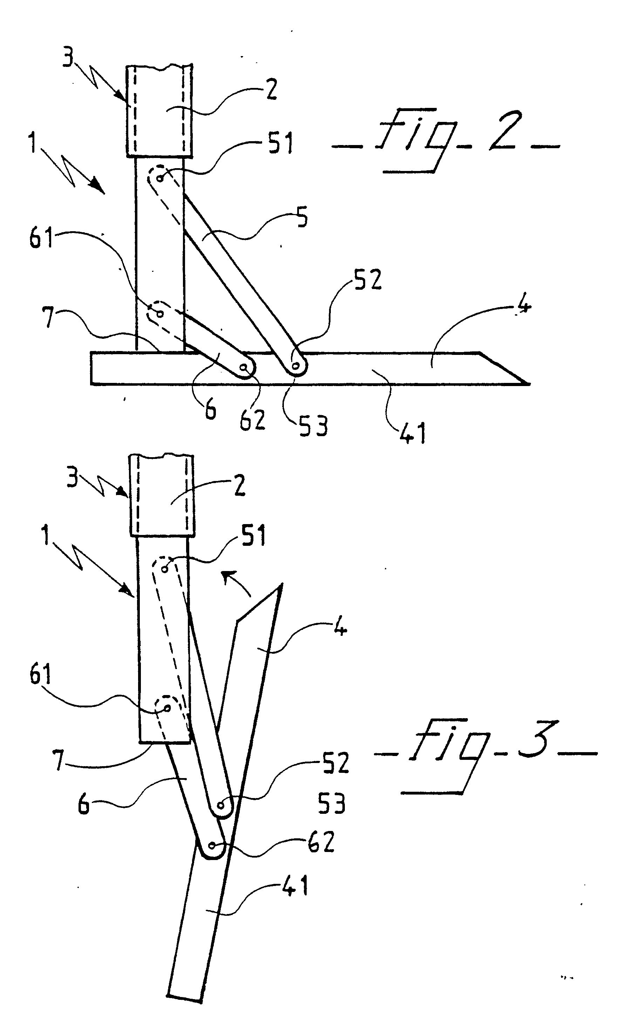

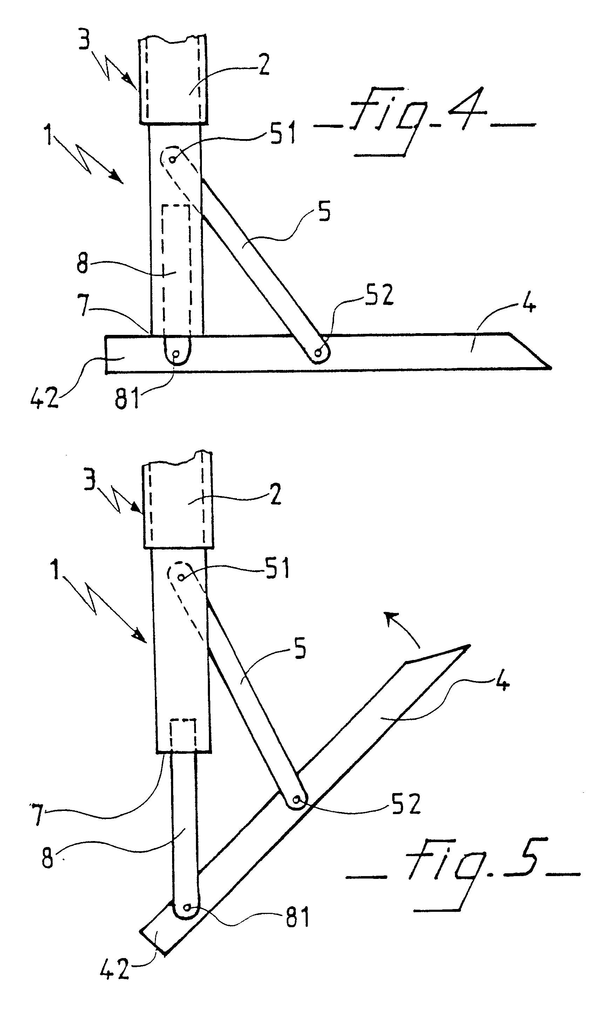

Conformément aux figures 2 et 3, les bras de manoeuvre 2 supportent la plate-forme 4 par l'intermédiaire d'un ensemble de deux bielles 5, articulée chacune, d'une part, sur le bras de manoeuvre 2, autour d'un axe 51, et, d'autre part, autour d'un axe 52, approximativement horizontal, passant par les points 53, situés sur les parties latérales 41 de la plate-forme 4.

Le mouvement de balancier de la plate-forme 4, relevée en position verticale, ou sensiblement verticale, s'effectue autour de l'axe 51, en procurant à celle-ci un quasi mouvement de translation, parallèlement au plan de l'ouverture, pratiquée dans la carrosserie du véhicule, et contre laquelle elle vient s'appuyer. Ce mouvement en translation permet d'appuyer uniformément la plate-forme 4 contre le joint d'étanchéité situé sur le périmètre de ladite ouverture. En effet, il n'existe plus, dans le dispositif selon l'invention, et à l'inverse des dispositifs connus à ce jour, d'axe d'articulation privilégié, autour duquel la force d'appui exercée sur la plate-forme 4 verticale présente un couple, dont la valeur est différente selon la distance du point d'action de la force audit axe ; on peut par conséquent écraser de la même façon le joint d'étanchéité en haut et en bas.

On notera également que la longueur des bielles 5 peuvent être de longueurs différentes, ou non symétriquement disposées par rapport à la plate-forme 4, et une telle réalisation ne sortirait bien entendu pas du cadre de l'invention.

Selon une première variante de réalisation du dispositif selon l'invention, on prévoit que deux biellettes 6, avantageusement, mais non nécessairement, disposées de chaque côté de la plate-forme 4, permettent notamment de la maintenir en butée 7 contre la partie inférieure des bras de manoeuvre 2 ; ces biellettes 6 permettent également de guider la plate-forme 4 lors de son relevage de la position horizontale à une position sensiblement verticale. Ce guidage facilite les manipulations de la plate-forme 4, en empêchant en particulier celle-ci de basculer de manière trop ample autour de son axe d'articulation 52.

Chacune des biellettes 6 est articulée, sur les bras de manoeuvre 2, autour d'un axe 61, et, sur la plate-forme 4, autour d'un axe 62, approximativement horizontal. Il est à noter que ces biellettes 6 sont facultatives, et qu'une butée, par exemple en forme de feuillure, peut être réalisée à l'extrémité de la plate-forme 4, de manière à venir s'appuyer sur les bras de manoeuvre 2, en position horizontale d'ouverture. Il est à noter que cette butée, nécessaire à l'horizontalité de la plate-forme 4 en position d'ouverture, peut prendre des formes variées, adaptées à chaque réalisation particulière de l'invention.

Dans cette première variante de réalisation du dispositif suivant l'invention, et conformément à la figure 3, la plate-forme 4 peut pivoter, en position relevée verticale, autour des deux axes 52 et 62 ; ces axes 52 et 62 sont alors en effet sensiblement alignés avec les deux axes 51 et 61, et on comprend aisément que l'ajoût des biellettes 6 ne modifie en rien, dans cette position de la plate-forme 4, le mouvement de balancier procuré par les bielles 5 ; l'ensemble constitué par la plate-forme 4, les bielles 5, et les biellettes 6 - ces éléments étant tous pratiquement dans le même plan - peut ainsi se balancer autour de l'axe 51, et permet à la plate-forme 4 d'écraser régulièrement le joint d'étanchéité.

Il est à noter que les longueurs respectives des bielles 5 et des biellettes 6 sont dans un rapport adéquat, et qui tient compte de la distance entre lesdits axes 52 et 62 ; le guidage de la plate-forme 4, lors de son relevage, puis de sa fermeture, est de cette manière totalement assuré.

En effet, dans cette variante, la longueur des biellettes 6 limite la translation que peuvent procurer les bielles 5, lors du relevage de la plate-forme 4 ; cette limitation est surtout importante, et recherchée, dans la phase de relevage, où on évite un trop grand débatement en rotation de la plate-forme 4 autour de l'axe d'articulation principal 52, mais il est évident que le jeu en translation disponible reste très suffisant, en position sensiblement verticale, pour adapter correctement la plate-forme 4 sur la carrosserie du véhicule.

En outre , il est évident que les biellettes 6 peuvent être de longueurs différentes sans nuire au guidage de la plate-forme 4.

Dans une seconde variante de réalisation du dispositif de fermeture selon l'invention, et conformément aux figures 4 et 5, sur lesquelles les éléments identiques à ceux décrits dans la première variante, et illustrés sur les figures 2 et 3, sont référencés par les mêmes numéros, les biellettes 6 de maintien de la plate-forme 4 sont remplacées par des pièces mobiles 8, qui, d'une part, sont articulées sur ladite plate-forme 4 suivant un axe 81, sensiblement horizontal, situé à son extrémité arrière 42, et, d'autre part, peuvent coulisser longitudinalement le long des bras de manoeuvre 2 grâce à des moyens adéquats connus en soi, qui permettent, en outre, le jeu transversal desdites pièces mobiles 8 par rapport aux bras de manoeuvre 2. Par exemple, les pièces mobiles 8 sont des tiges de section nettement inférieure à celle des bras de manoeuvre 2, et peuvent coulisser à l'intérieur de ceux-ci, selon un guidage intérieur prévu à cet effet et ayant notamment une section transversale supérieure à celle des tiges ; un jeu transversal est de cette manière possible à l'intérieur des bras de manoeuvre 2.

Il est à noter que, dans cette variante, la butée 7 se trouve dans le prolongement des bras de manoeuvre 2, et que la longueur des pièces mobiles 8 n'influence en rien le mouvement de balancier procuré par les bielles 5, lesdites pièces mobiles 8 coulissant librement à l'aplomb desdits bras de manoeuvre 2 ; en position verticale de la plate-forme 4, et tous les axes d'articulation 51, 52 et 81 étant alignés, on comprend en effet, sous réserve du jeu transversal laissé aux pièces mobiles 8 dans leur guide, que l'ensemble constitué par la plate-forme 4, les bielles 5 et lesdites pièces mobiles 8, peut se balancer autour de l'axe 51, procurant tous les avantages déjà cités du dispositif conforme à l'invention.

Il est évident que le dispositif de fermeture selon l'invention n'est en aucune façon limité par les dispositions particulières précédemment décrites, et que tous les équivalents techniques pouvant être mis en jeu dans son esprit ne sortiraient pas de son cadre.

Le dispositif de fermeture de la plate-forme d'un hayon élévateur selon l'invention est notamment destiné aux hayons à glissières qui équipent les véhicules pour handicapés moteurs, ou certains véhicules utilitaires, servant par exemple à transporter des objets, tels que du linge ou des colis, dans des corbeilles munies de roulettes, et dont on veut que la plate-forme soit utilisée en tant que porte étanche sur la carrosserie.

**Revendications**

1 - Dispositif de fermeture de la plate-forme d'un hayon élévateur, notamment du type à glissières, caractérisé en ce que les bras de manoeuvre (2) de la) plate-forme (4), qui peuvent coulisser dans des rails prévus à cet effet dans le bâti (3) du hayon (1), supportent ladite plate-forme (4) par l'intermédiaire d'au moins deux bielles (5) articulées librement, et préférentiellement disposées, par exemple de part et d'autre de la plate-forme (4), de telle manière qu'articulées librement sur lesdits bras de manoeuvre (2), lesdites bielles (5) procurent un mouvement de balancier à la plate-forme (4) relevée en position verticale, qui peut, de ce fait, être appliquée uniformément contre la carrosserie du véhicule équipé du hayon (1), en soumettant le joint, qui assure l'étanchéité entre la plate-forme (4) et la carrosserie, à une pression constante sur toute sa longueur.

2 - Dispositif de fermeture selon la revendication 1, caractérisé en ce qu'il comprend au moins deux biellettes (6), par exemple symétriquement disposées de chaque côté de la plate-forme (4), qui est alors maintenue en butée (7) contre la partie inférieure des bras de manoeuvre (2) solidaires du bâti (3), lorsque ladite plate-forme (4) se trouve en position d'ouverture maximale, lesdites biellettes (6) participant par ailleurs avantageusement au guidage de la plate-forme (4) lors de son relevage.

3 - Dispositif de fermeture selon la revendication 1, caractérisé en ce qu'il comprend des pièces mobiles (8), qui, d'une part, sont articulées sur ladite plate-forme (4) suivant un axe (81) sensiblement horizontal, situé à l'extrémité (42) de la plate-forme (4), et qui, d'autre part, peuvent coulisser longitudinalement le long des bras de manoeuvre (2) par l'intermédiaire de moyens adéquats, qui permettent, en outre, le jeu transversal desdites pièces mobiles 8 par rapport aux bras de manoeuvre 2.

_Fig_1_

_Fig_2_

_Fig_3_

_Fig.4_

_Fig.5_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-2 040 866  (M.D. ROBINSON) <br> * figures 1-7 * <br> --- | 1-3 | B 60 P    1/46 |
| A | DE-A-2 455 227  (F. PRESTEL) <br> * figure 1 * <br> --- | 1 | |
| A | FR-A-2 537 121  (NICCOLI & NALDONI SPA) <br> ----- | | |

| | DOMAINES TECHNIQUES RECHERCHES (Int. Cl.5) |
|---|---|
| | B 60 P |

Le présent rapport a été établi pour toutes les revendications

| Lieu de la recherche | Date d'achèvement de la recherche | Examinateur |
|---|---|---|
| BERLIN | 04-07-1990 | LUDWIG H J |